# EUROPEAN PATENT APPLICATION

(11) **EP 4 538 067 A1**
(43) Date of publication of application: **16.04.2025**
(21) Application number: 24205194.4
(22) Date of filing: 08.10.2024
(51) Int. Cl.: B60C 13/00, B29D 30/72

(54) **TIRE OR ITEM HAVING A CONTRASTING SURFACE AND METHOD FOR CREATING CONTRAST ON A SURFACE**

(30) Priority: 12.10.2023 US 202363589826 P
(71) Applicant: The Goodyear Tire & Rubber Company, Akron, OH 44316 (US)
(72) Inventor: KOTECKY, Ondrej, L-7230 Helmsange (LU); PROEHS, Philippe Joseph Willy, L-7750 Colmar-Berg (LU)
(74) Representative: Kutsch, Bernd

(57) **Abstract**

A tire or item is disclosed having at least one surface, preferably a rubber surface. At least one region on the surface includes a plurality of protrusions. The positioned are positioned in a random pattern or in a pseudo-random pattern within the region.

## Description

### BACKGROUND

A tire is typically made of black rubber. Various information is often presented on the sidewall or other surface of a tire. Such information in the form of letters or other structures is often made of the same rubber as the tire. As such, the letters or other structures tend to blend into the tire and can be difficult to see.

### SUMMARY OF THE INVENTION

The invention relates to a tire in accordance with claim 1, to an item in accordance with claim 2, and to a method in accordance with claim 13.

Dependent claims refer to preferred embodiments of the invention.

### BRIEF DESCRIPTION OF THE DRAWINGS

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.
FIG. 1 is a drawing of a tire having a region with a plurality of protrusions according to an embodiment of the present disclosure.
FIG. 2 is a drawing of a first pattern of protrusions extending from a wall of the tire of FIG. 1 according to an embodiment of the present disclosure.
FIG. 3 is a drawing of a second pattern of protrusions extending from a wall of the tire of FIG. 1 according to an embodiment of the present disclosure.
FIG. 4A is a drawing of a third pattern of protrusions extending from a wall of the tire of FIG. 1 according to an embodiment of the present disclosure.
FIG. 4B depicts a top view of protrusions that depict an angular position of the protrusions according to an embodiment of the present disclosure.
FIG. 5 is a drawing of a fourth pattern of protrusions extending from a wall of the tire of FIG. 1 according to an embodiment of the present disclosure.
FIG. 6 is a drawing of a fifth pattern of protrusions extending from a wall of the tire of FIG. 1 according to an embodiment of the present disclosure.
FIG. 7 is a drawing depicting examples of protrusions having varying surface contours according to an embodiment of the present disclosure.
FIG. 8 is a drawing depicting examples of protrusions having various amorphous shapes according to an embodiment of the present disclosure.
FIG. 9 is a drawing of one method for creating the region with a plurality of protrusions according to an embodiment of the present disclosure.
FIG. 10 is a drawing of another method for creating the region with a plurality of protrusions according to an embodiment of the present disclosure.

### DETAILED DESCRIPTION OF PREFERRED EMBODIMENTS OF THE INVENTION

Disclosed herein are various embodiments of varying a surface of a structure such as the sidewall of a tire. Reference will now be made in detail to the description of the embodiments as illustrated in the drawings, wherein like reference numbers indicate like parts throughout the several views.

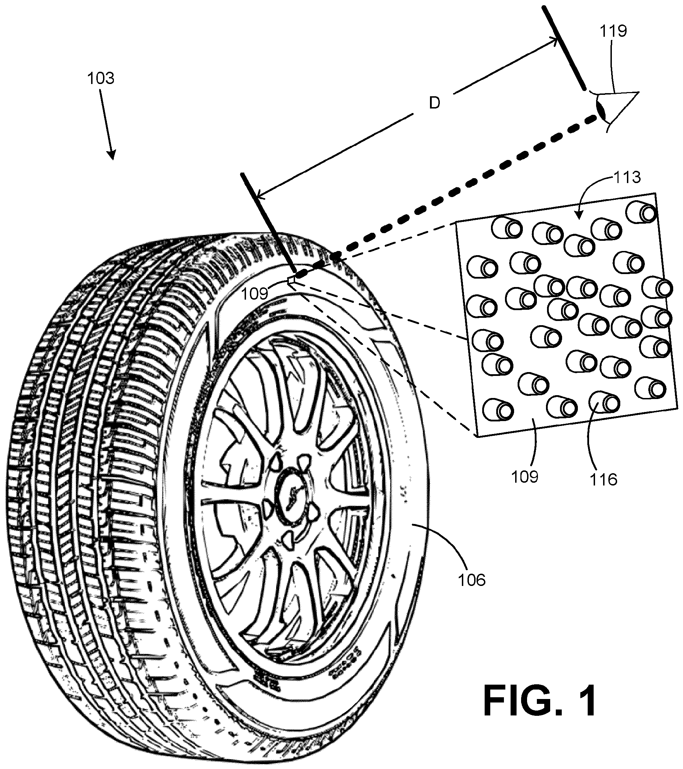

Referring then to FIG. 1, shown is an example of a tire 103 that includes various surfaces 106 according to various embodiments of the present disclosure. Various features may be disposed on the surfaces 106 of the tire 103. In one embodiment, an example of a surface 106 of the tire 103 comprises a sidewall or other surfaces of the tire 103 that may include lettering, images, or other items. For example, the surface 106 may comprise the side of a tread or any other surface of a tire 103. In addition, the various embodiments of the present disclosure may apply to surfaces of a non-pneumatic tire. Such surfaces may be located, for example, on the side of a tread of a non-pneumatic tire or some other surface. In one embodiment, the tire 103 is constructed of materials comprising various forms of rubber. Alternatively, the tire 103 may be constructed from other materials. For example, in the case that the tire 103 comprises a non-pneumatic tire, the tire 103 may include a tread and spokes, where the spokes or potentially other structures are made of a material such as polyurethane, plastics, or other material. The surface 106 may comprise, for example, a surface of a tire 103 that is manufactured from rubber. Alternatively, the surface 106 may be a surface may be constructed from some other material such as polyurethane, plastic, other material.

The surface 106 of the tire 103 includes a region 109 that has a pattern 113 of protrusions 116 that extend from the surface 106. Alternatively, the pattern 113 of protrusions 116 can be engraved or molded on a surface 106 other than the sidewall of a tire 103. In one embodiment, the pattern 113 of protrusions 116 comprises a pseudo-random pattern as will be described. According to various aspects, a number of features of the pattern 113 of protrusions 116 may be varied in a pseudo-random or random manner. For example, the features that may vary include the position of the protrusions 116 in the pattern 113, the shape of the protrusions 116, the height of the protrusions 116, and/or the volume of the protrusions 116.

In addition, the angular position of individual ones of the protrusions 116 may be varied randomly or pseudo-randomly relative to each other or relative to a predefined radial axis of the tire. Still further, a surface contour at a distal end of the respective protrusions 116 may vary relative to each other as will be described. In addition, other aspects of the respective protrusions 116 may be varied.

The protrusions 116 in a region 109 create a contrast between the region 109 and other portions of the surface 106 as perceived when viewed by individuals. Given the angle of incidence at which light strikes the region 109, the protrusions 116 will cast shadows onto the surface 106 and onto adjacent ones of the protrusions 116. As contemplated herein, an angle of incidence is an angle that an incident ray makes relative to a perpendicular axis to the surface 106.

The shadows that are created and the actual structures of the protrusions themselves impart a darker appearance to the region 109 relative to other portions of the surface 106. According to one embodiment, due to the randomization or pseudo-randomization of one or more features in the pattern 113 of the protrusions 116 as mentioned above, when the region 109 of the surface 106 is viewed, the appearance of the region 109 remains more uniform from one vantage point to the next. Also, the appearance of lightened artifacts due to alignment of respective protrusions 116 is reduced or eliminated.

According to one embodiment, the overall size of the protrusions 116 (FIG. 1) is specified so that the structure of the protrusions 116 cannot be resolved by the naked eye 119 at a predefined distance D from the region 109 on the surface 106. The predefined distance D may be, for example, 0.5 meters, 1 meter, 2 meters, or other predefined distance value.

Accordingly, in one embodiment, the size of the protrusions 116 is generally sub-millimeter or less although the protrusions 116 may comprise some other size. Assuming the protrusions 116 are sized in the sub-millimeter range, then the protrusions 116 have a maximum width of less than 1 millimeter given tapered sizes or various shapes. Also, such sub-millimeter protrusions 116 may be less than 1 millimeter in height.

As contemplated here, resolving the structure of the protrusions 116 with the naked eye refers to the ability to see individual ones of the protrusions 116. In this manner, the region 109 will appear more as a single shade or color as opposed to identifying individual protrusions 116.

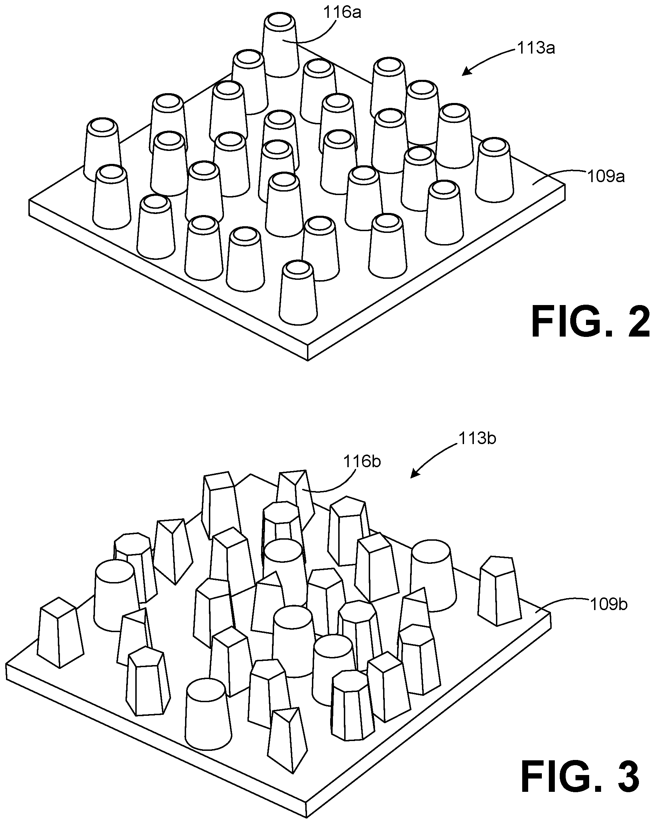

Referring next to FIG. 2, shown is an example of the region 109 (FIG. 1) denoted herein as region 109a according to an embodiment of the present disclosure. The region 109a includes an example of the pattern 113 (FIG. 1) of protrusions 116 (FIG. 1) arranged in a pseudo-random manner, denoted herein as a pseudo-random pattern 113a of protrusions 116a.

In one example, the pseudo-random pattern 113a of protrusions 116a involves positioning the protrusions 116a in a pseudo-random pattern 113a within the region 109a according to one embodiment. As contemplated herein, a pseudo-random pattern 113a is created by positioning the protrusions 116a according to a determinative process, but at the same time, the pseudo-random pattern 113a still appears to be statistically random.

The pseudo-random pattern 113a is deterministic in that certain rules are specified to ensure a desired appearance of the pseudo-random pattern 113a as viewed by the naked eye 119 (FIG. 1). For example, in one embodiment, the pseudo-random pattern 113a is defined by a predefined maximum distance between any two adjacent ones of the protrusions 116a. That is to say that the protrusions 116a are positioned such that no two adjacent ones of the protrusions 116a are farther apart than the predefined maximum distance. Stated another way, a distance between any two adjacent ones of the protrusions 116a must be less than or equal to the predefined maximum distance. This ensures that blank spaces are not created in the pseudo-random pattern 113a that are too large that might impact a desired visual contrast of the region 109a relative to other portions of the surface 106 (FIG. 1).

In another embodiment, the pseudo-random pattern 113a is defined by a predefined minimum distance between any two adjacent ones of the protrusions 116a. That is to say that the protrusions 116a are positioned such that no two adjacent ones of the protrusions 116a are closer to each other than the predefined minimum distance. Stated another way, a distance between any two adjacent ones of the protrusions 116a must be greater or equal to the predefined minimum distance. This ensures that protrusions 116a do not clump together in various areas of the region 109a as might happen in a purely random placement of protrusions in the region 109a such that a desired visual contrast of the region 109a relative to other portions of the surface 106.

In another embodiment, the protrusions 116a depicted in the pseudo-random pattern 113a have a cross-section that is in the shape of a circle, although the cross-section may comprise other shapes as will be described. In this respect, the cross-section is taken in a plane that is parallel to the surface 106. In addition, according to one embodiment, the sides of the protrusions 116a are tapered so that, in the case the protrusions 116a are formed by way of voids in a mold, they can be easily removed from the voids in the mold as will be described.

Referring next to FIG. 3, shown is an example of the region 109 (FIG. 1) denoted herein as region 109b according to an embodiment of the present disclosure. The region 109b includes an example of the pattern 113 (FIG. 1) of protrusions 116 (FIG. 1) arranged in a pseudo-random manner, denoted herein as a pseudo-random pattern 113b of protrusions 116b.

In addition, a shape of a cross-section of individual ones of the protrusions 116b in the region 109b differ relative to each other. For example, the shape of a cross-section of individual ones of the protrusions 116b differ relative to the shape of the cross-section of other ones of the protrusions 116b. The shapes of the cross-sections of the protrusions 116b may comprise, for example, a circle or a polygon as shown, or an amorphous shape as will be described. The polygons may comprise, for example, triangles, squares, pentagons, hexagons, heptagons, octagons, or other polygons having any number of sides.

In one embodiment, the shape of the cross-sections of the protrusions 116b vary randomly or pseudo-randomly. If the shape of the cross-sections of the protrusions 116b vary pseudo-randomly, then a rule may be specified that no two adjacent ones of the protrusions would have the same cross-sectional shape. The randomness or pseudo-randomness of the variation of the shapes of the cross-sections of the protrusions 116b provides for a desired visual contrast of the region 109b relative to other portions of the surface 106 (FIG. 1).

In addition, according to one embodiment, the sides of the protrusions 116b are tapered so that, in the case the protrusions 116b are formed by way of voids in a mold, they can be easily removed from the voids in the mold as will be described.

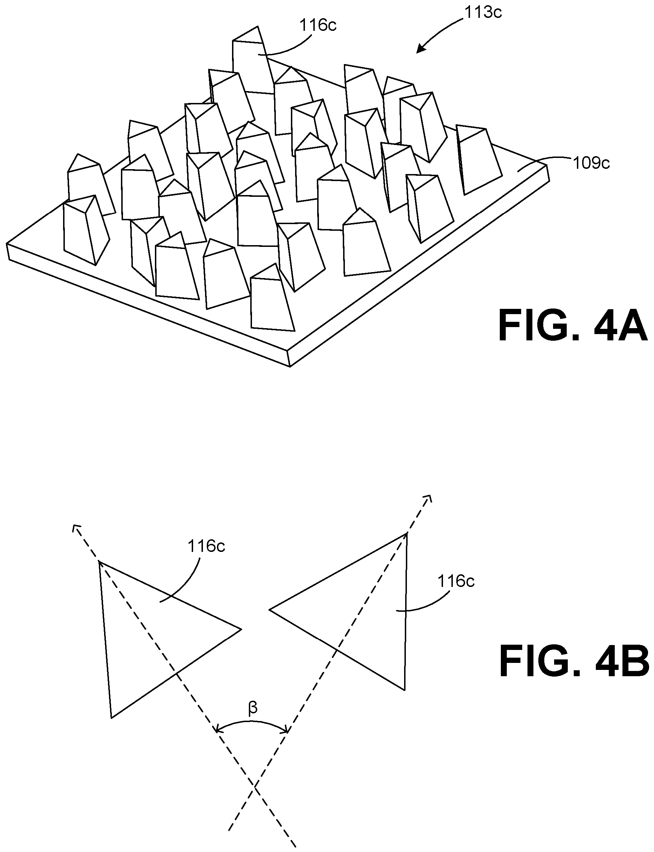

Referring next to FIG. 4A, shown is another example of the region 109 (FIG. 1) denoted herein as region 109c according to an embodiment of the present disclosure. The region 109c includes an example of the pattern 113 (FIG. 1) of protrusions 116 (FIG. 1) arranged in a pseudo-random manner, denoted herein as a pseudo-random pattern 113c of protrusions 116c.

In the pattern 113c, the protrusions 116c have a cross-section of a polygon such as a triangle as shown. Each of the protrusions 116c is positioned with a given angular position within the region 109c. As contemplated herein, the angular position of an object refers to how far the object is rotated relative to a reference angular position. The reference angular position may comprise the angular position of a given protrusion 116c within the region 109c or may be a predefined angular position relative to the structure of the tire such as a radial axis.

In one embodiment, the angular position of individual ones of the protrusions 116c is varied randomly or pseudo-randomly relative to a reference angular position or relative to each other. In one example, for protrusions 116c that have a common cross-sectional shape, a first one of the protrusions 116c may be positioned with a first angular position, and a second one of the protrusions 116c may be positioned with a second angular position, where the first angular position differs relative to the second angular position.

The randomness or pseudo-randomness of the variation of the angular positions of the protrusions 116c in this manner provides for a desired visual contrast of the region 109c relative to other portions of the surface 106 (FIG. 1).

In addition, according to one embodiment, the sides of the protrusions 116c are tapered so that, in the case the protrusions 116c are formed by way of voids in a mold, they can be easily removed from the voids in the mold as will be described.

Referring to FIG. 4B, shown is a top view of two example protrusions 116c. As shown, the angular position of either one of the protrusions 116c varies relative to the angular position of the other one of the protrusions 116c by an angle β.

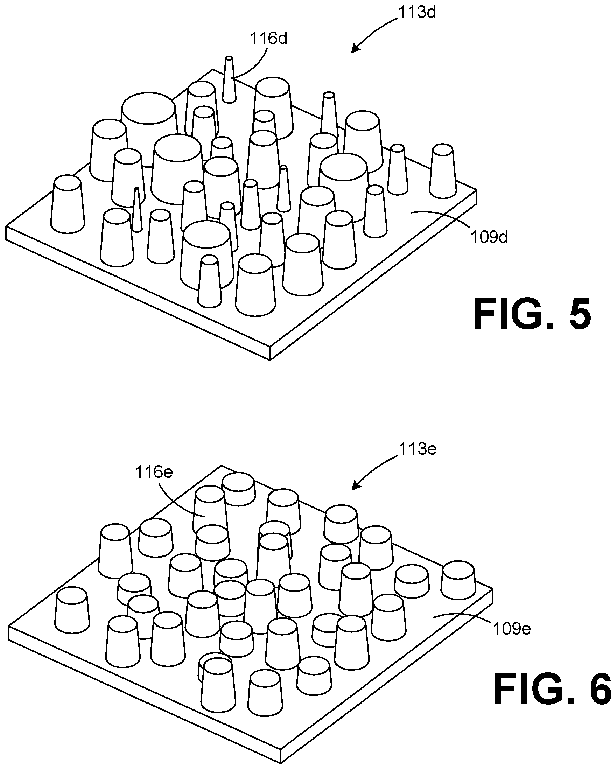

Referring next to FIG. 5, shown is another example of the region 109 (FIG. 1) denoted herein as region 109d according to an embodiment of the present disclosure. The region 109d includes an example of the pattern 113 (FIG. 1) of protrusions 116 (FIG. 1) arranged in a pseudo-random manner, denoted herein as a pseudo-random pattern 113d of protrusions 116d.

In the region 109d, the width of each of the protrusions 116d is varied in a random or pseudo-random manner. In one embodiment, the width of individual ones of the protrusions 116d is varied relative to at least some of the other ones of the protrusions 116d. Stated another way, given that the protrusions 116d may be tapered, the maximum width of individual ones of the protrusions 116d vary relative to each other.

In addition, according to one embodiment, the sides of the protrusions 116d are tapered so that, in the case the protrusions 116d are formed by way of voids in a mold, they can be easily removed from the voids in the mold as will be described.

The randomness or pseudo-randomness of the variation of the width or maximum width of the protrusions 116d in this manner provides for a desired visual contrast of the region 109d relative to other portions of the surface 106 (FIG. 1).

Referring next to FIG. 6, shown is another example of the region 109 (FIG. 1) denoted herein as region 109e according to an embodiment of the present disclosure. The region 109e includes an example of the pattern 113 (FIG. 1) of protrusions 116 (FIG. 1) arranged in a pseudo-random manner, denoted herein as a pseudo-random pattern 113e of protrusions 116e.

In the region 109e, the height of each of the protrusions 116e is varied in a random or pseudo-random manner. In one embodiment, the height of individual ones of the protrusions 116e is varied relative to at least some of the other ones of the protrusions 116e. Alternatively, the height of each individual one of the protrusions 116e is unique with respect to the heights of the remaining ones of the protrusions 116e within a region 109e.

In addition, according to one embodiment, the sides of the protrusions 116e are tapered so that, in the case the protrusions 116e are formed by way of voids in a mold, they can be easily removed from the voids in the mold as will be described.

The randomness or pseudo-randomness of the variation of the height of the protrusions 116e in this manner provides for a desired visual contrast of the region 109e relative to other portions of the surface 106 (FIG. 1).

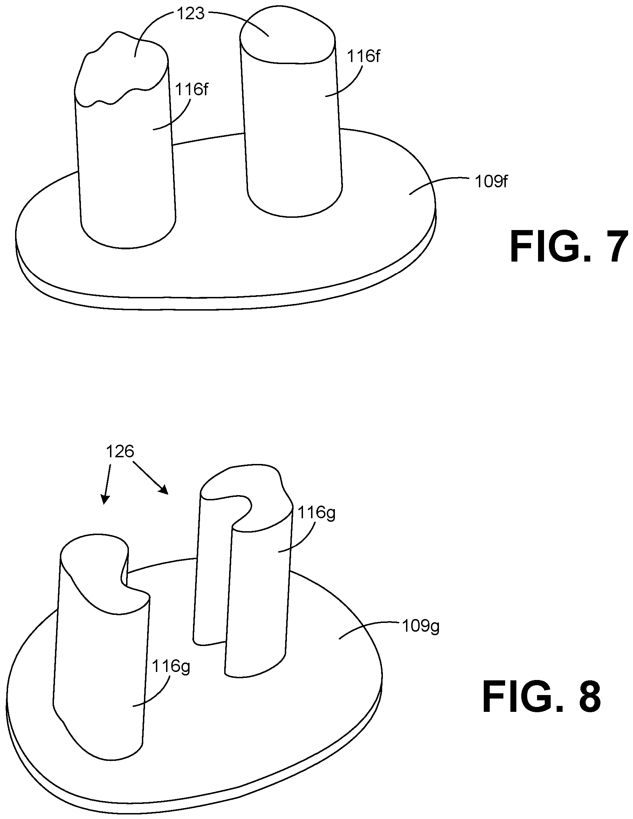

Referring next to FIG. 7, shown is an example of a portion of a region 109 (FIG. 1) denoted herein as a region 109f according to an embodiment of the present disclosure. The portion of the region 109f includes a pair of protrusions 116 (FIG. 1) denoted herein as protrusions 116f. The protrusions 116f are part of a pattern 113 (FIG. 1) arranged in a pseudo-random manner as described above.

According to one embodiment, disposed on the distal end of each of the protrusions 116f is a surface contour 123. As shown, the surface contour 123 of a first one of the protrusions 116f is unique with respect to the second one of the protrusions 116f. According to another embodiment, in a given pattern 113, the surface contour 123 of each one of the protrusions 116f is unique with respect to the surface contours 123 of the other ones of the protrusions 116f. In this way, the surface contours 123 are created in a random or pseudo-random manner.

In addition, according to one embodiment, the sides of the protrusions 116f may be tapered so that, in the case the protrusions 116f are formed by way of voids in a mold, they can be easily removed from the voids in the mold as will be described.

The randomness or pseudo-randomness of the variation of the height of the protrusions 116f in this manner provides for a desired visual contrast of the region 109f relative to other portions of a surface 106 (FIG. 1).

Referring next to FIG. 8, shown is an example of a portion of a region 109 (FIG. 1) denoted herein as a region 109g according to an embodiment of the present disclosure. The portion of the region 109g includes a pair of protrusions 116 (FIG. 1) denoted herein as protrusions 116g. Although only two protrusions 116g are shown, it is understood that the region 109g may include many more protrusions 116g as is depicted in the various regions 109 described above. Thus, the protrusions 116g are part of a pattern 113 (FIG. 1) arranged in a pseudo-random manner as described above.

According to one embodiment, the cross-sectional shape of each individual one of the protrusions 116g is amorphous. As contemplated herein, an amorphous shape is one that is indefinite or arbitrary. In one example, the amorphous cross-sectional shape of a first one of the protrusions 116f is unique with respect to the amorphous cross-sectional shape 126 of the second one of the protrusions 116g. According to another embodiment, in a given pattern 113, the amorphous cross-sectional shape of each one of the protrusions 116g is unique with respect to the amorphous cross-sectional shape of the other ones of the protrusions 116g. In this way, the amorphous cross-sectional shape 126 of each of the protrusions 116g is created in a random or pseudo-random manner.

In addition, according to one embodiment, the sides of the protrusions 116g may be tapered so that, in the case the protrusions 116g are formed by way of voids in a mold, they can be easily removed from the voids in the mold as will be described.

The randomness or pseudo-randomness of the variation of the amorphous cross-sectional shape of the protrusions 116f in this manner provides for a desired visual contrast of the region 109g relative to other portions of a surface 106 (FIG. 1).

Referring back to FIGS. 1 through 8, various features associated with a pattern 113 of protrusions 116 are described. It is understood that in any given pattern 113 of protrusions 116, any combination of two or more of these features may be combined to achieve a desired visual contract or effect relative to other regions on the surface 106 of a tire 103. As described above, such features may comprise, for example, the pseudo-random positioning of the protrusions 116a (FIG. 2), the cross-sectional shape of the protrusions 116a (FIG. 2), the fact that the cross-section of individual ones of the protrusions 116b (FIG. 3) in the region 109b (FIG. 3) differ relative to each other, or the fact that the angular position of individual ones of the protrusions 116c (FIG. 4) may be varied randomly or pseudo-randomly relative to a reference angular position or relative to each other. The features also include a width or maximum width of each of the protrusions 116d (FIG. 5) that may be varied in a random or pseudo-random manner, a height of each of the protrusions 116e (FIG. 6) that may be varied in in a random or pseudo-random manner, a surface contour 123 (FIG. 7) of each of the protrusions 116f (FIG. 7) may be unique with respect to other ones of the protrusions 116f (FIG. 7), or an amorphous cross-sectional shape 126 (FIG. 8) of one of the protrusions 116f (FIG. 8) that may be unique with respect to amorphous cross-sectional shape 126 of other ones of the protrusions 116f.

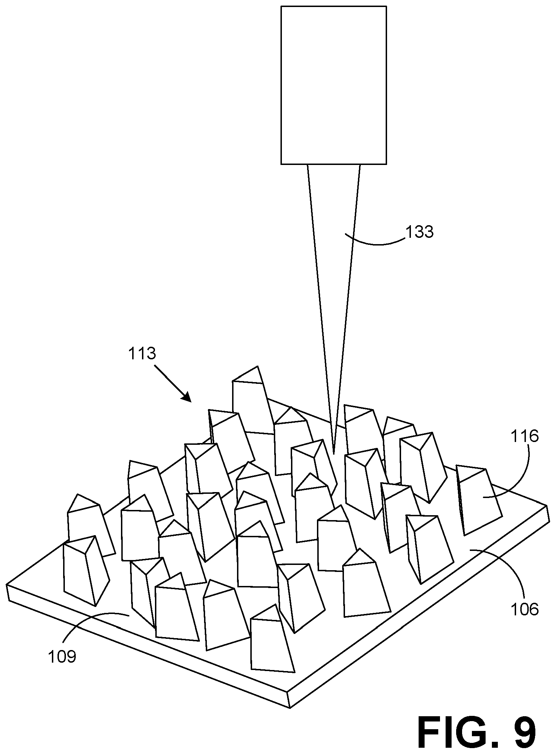

Referring next to FIG. 9, shown is one approach to creating a pseudo-random pattern 113 of protrusions 116 in a region 109 on the surface 106 of a tire 103 (FIG. 1). In one embodiment, a laser 133 is controlled to engrave the pseudo-random pattern 113 of protrusions 116 onto the surface 106 of the tire 103.

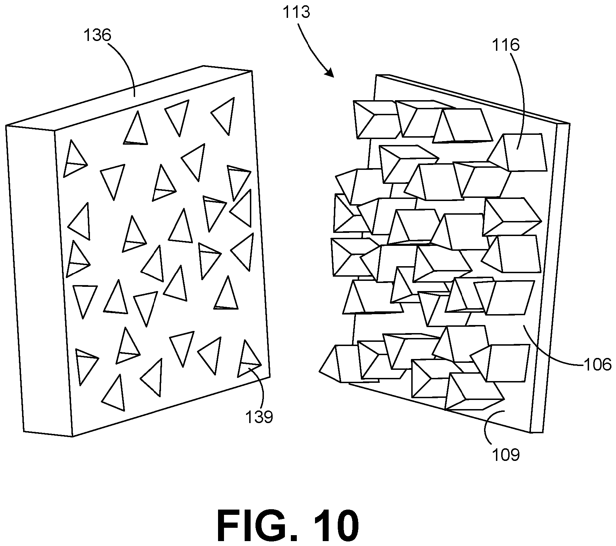

Turning to FIG. 10, shown is a drawing that depicts a portion of a mold 136 that is used to form or create the pseudo-random pattern 113 of protrusions 116 in a region 109 on a surface 106 of a tire 103 (FIG. 1). In one embodiment, the mold 136 is part of a tire mold used to create tires 103. As shown, the mold 136 includes voids 139 that form the protrusions 116.

With reference to FIGS. 1 through 10, in view of the foregoing discussion, below is a description of various example embodiments of the present disclosure. It is understood that the below embodiments are not an exhaustive recitation of the possible embodiments of the present disclosure.

Embodiment 1 is an apparatus comprising a tire having at least one surface, where at least one region on the surface includes a plurality of protrusions. The protrusions are positioned in a pseudo-random pattern within the region.

Embodiment 2 is an apparatus as set forth in embodiment 1, wherein the surface is located on a sidewall of the tire.

Embodiment 3 comprises an apparatus as set forth in embodiments 1 or 2, wherein the pseudo-random pattern is defined by a predefined minimum distance between any two adjacent ones of the protrusions.

Embodiment 4 comprises an apparatus as set forth in any one of embodiments 1 through 3, wherein the pseudo-random pattern is defined by a predefined maximum distance between any two adjacent ones of the protrusions.

Embodiment 5 comprises an apparatus as set forth in any one of embodiments 1 through 4, wherein individual ones of the protrusions are less than 1 millimeter in height.

Embodiment 6 comprises an apparatus as set forth in any one of embodiments 1 through 5, wherein a maximum width of individual ones of the protrusions is less than 1 millimeter.

Embodiment 7 comprises an apparatus as set forth in any one of embodiments 1 through 6, wherein the protrusions comprise a cross-section in a shape of a circle.

Embodiment 8 comprises an apparatus as set forth in any one of embodiments 1 through 6, wherein the protrusions comprise a cross-section in a shape of a polygon.

Embodiment 9 comprises an apparatus as set forth in any one of embodiments 1 through 6, wherein the protrusions comprise an amorphous cross-section.

Embodiment 10 comprises an apparatus as set forth in any one of embodiments 1 through 9, wherein a shape of a cross-section of individual ones of the protrusions differs relative to the shape of the cross-section of other ones of the protrusions.

Embodiment 11 comprises an apparatus as set forth in any one of embodiments 1 through 10, wherein a size of the protrusions is specified such that the protrusions cannot be resolved by the naked human eye at a distance of at least 1 meter.

Embodiment 12 comprises an apparatus as set forth in any one of embodiments 1 through 11, further comprising each of the protrusions having one of a plurality of surface contours. Each of the surface contours are disposed at a distal end of a respective one of the protrusions. A first one of the surface contours is unique with respect to a plurality of the other ones of the surface contours.

Embodiment 13 comprises an apparatus as set forth in any one of embodiments 1-9, 11, and 12, wherein a plurality of the protrusions have a common shape, and at least a first one of the protrusions is positioned with a first angular position and at least a second one of the protrusions is positioned with a second angular position, where the first angular position differs relative to the second angular position.

Embodiment 14 is a method, comprising creating a plurality of protrusions within at least one region on a surface of a tire, wherein the positions of the protrusions within the at least one region are arranged in a pseudo-random pattern.

Embodiment 15 comprises a method as set forth in embodiment 14, wherein the creation of the plurality of protrusions further comprises creating the protrusions by way of a mold.

Embodiment 16 comprises a method as set forth in embodiment 14, wherein the creation of the plurality of protrusions further comprises creating the protrusions by way of laser engraving.

Embodiment 17 comprises a method as set forth in any one of embodiments 14 through 16, further comprising specifying a predefined minimum distance between any two adjacent ones of the protrusions in the pseudo-random pattern, and specifying a predefined maximum distance between any two adjacent ones of the protrusions in the pseudo-random pattern.

Embodiment 18 comprises a method as set forth in any one of embodiments 14 through 17, wherein individual ones of the protrusions are less than 1 millimeter in height and have a maximum width of less than 1 millimeter.

Embodiment 19 is an apparatus, comprising an item including rubber surface. At least one region is included on the rubber surface, the at least one region including a plurality of protrusions. The protrusions are positioned in a pseudo-random pattern within the region.

Embodiment 20 comprises an apparatus as set forth in embodiment 19, wherein a shape of a cross-section of individual ones of the protrusions differs relative to the shape of the cross-section of other ones of the protrusions.

Embodiment 21 comprises an apparatus of embodiments 19 or 20, wherein individual ones of the protrusions are less than 1 millimeter in height and have a maximum width of less than 1 millimeter.

## Claims

1. A tire having at least one surface, preferably a rubber surface, at least one region on the surface including a plurality of protrusions, said protrusions being positioned in a random pattern or in a pseudo-random pattern within the region.

2. An item including a rubber surface, at least one region on the rubber surface including a plurality of protrusions, said the protrusions being positioned in a random pattern or in a pseudo-random pattern within the region.

3. The tire of claim 1, wherein the surface is located on a sidewall of the tire.

4. The tire or item according to at least one of the previous claims, wherein the random or pseudo-random pattern is defined by a predefined minimum distance between any two adjacent ones of the protrusions.

5. The tire or item according to at least one of the previous claims, wherein the random or pseudo-random pattern is defined by a predefined maximum distance between any two adjacent ones of the protrusions.

6. The tire or item according to at least one of the previous claims, wherein individual ones of the protrusions are less than 1 millimeter in height; and/or wherein a maximum width of individual ones of the protrusions is less than 1 millimeter.

7. The tire or item according to at least one of the previous claims, wherein the protrusions comprise at least one or a combination of a cross-section in a shape of a circle, of a cross-section in a shape of a polygon or an amorphous cross-section.

8. The tire or item according to at least one of the previous claims, wherein a shape of a cross-section of individual ones of the protrusions differs relative to the shape of the cross-section of other ones of the protrusions.

9. The tire or item according to at least one of the previous claims, wherein a size of the protrusions is specified such that the protrusions cannot be resolved by a naked human eye at a distance of at least 1 meter.

10. The tire or item according to at least one of the previous claims, wherein:
each of the protrusions has one of a plurality of surface contours;
each of the surface contours are disposed at a distal end of a respective one of the protrusions; and
a first one of the surface contours is unique with respect to a plurality of other ones of the surface contours.

11. The tire or item according to at least one of the previous claims, wherein a plurality of the protrusions have a common shape and at least a first one of the protrusions is positioned with a first angular position and at least a second one of the protrusions is positioned with a second angular position, where the first angular position differs relative to the second angular position.

12. The tire or item according to at least one of the previous claims, wherein the pattern is a pseudo-random pattern.

13. A method comprising creating a plurality of protrusions within at least one region on a surface of a tire, wherein positions of the protrusions within the at least one region are arranged in a random or pseudo-random pattern.

14. The method of claim 13, wherein the creation of the plurality of protrusions further comprises creating the protrusions by way of a mold and/or by way of laser engraving.

15. The method of claim 13 or 14, further comprising:
specifying a predefined minimum distance between any two adjacent ones of the protrusions in the random or pseudo-random pattern;
specifying a predefined maximum distance between any two adjacent ones of the protrusions in the ramdom or pseudo-random pattern.
